(19) Europäisches Patentamt
European Patent Office
Office européen des brevets

(11) **EP 3 221 398 B1**

(12) **EUROPEAN PATENT SPECIFICATION**

(45) Date of publication and mention
of the grant of the patent:
**26.09.2018 Bulletin 2018/39**

(51) Int Cl.:
***C08L 23/08*** (2006.01)    ***C08F 210/02*** (2006.01)
***C08F 10/02*** (2006.01)

(21) Application number: **15786931.4**

(86) International application number:
**PCT/EP2015/074863**

(22) Date of filing: **27.10.2015**

(87) International publication number:
**WO 2016/078880 (26.05.2016 Gazette 2016/21)**

(54) **POLYETHYLENE COMPOSITION HAVING HIGH STRESS CRACKING RESISTANCE**

POLYETHYLENZUSAMMENSETZUNG MIT HOHER SPANNUNGSRISSBESTÄNDIGKEIT

COMPOSITION DE POLYÉTHYLÈNE AYANT UNE RÉSISTANCE ÉLEVÉE À LA FISSURATION SOUS CONTRAINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2014 US 201462081396 P**

(43) Date of publication of application:
**27.09.2017 Bulletin 2017/39**

(73) Proprietor: **Basell Polyolefine GmbH**
**50389 Wesseling (DE)**

(72) Inventors:
• **MANNEBACH, Gerd**
**56294 Münstermaifeld (DE)**
• **MARCZINKE, Bernd Lothar**
**65959 Frankfurt (DE)**

• **MEIER, Gerhardus**
**60320Frankfurt (DE)**
• **SCHÜLLER, Ulf**
**60486 Frankfurt/M (DE)**
• **VITTORIAS, Iakovos**
**55129 Mainz (DE)**
• **MAVRIDIS, Harilaos**
**Lebanon, Ohio 45036 (US)**

(74) Representative: **Gaverini, Gaetano Luigi Attilio**
**Basell Poliolefine Italia S.r.l.**
**Intellectual Property**
**P.le Donegani, 12**
**44122 Ferrara (IT)**

(56) References cited:
**EP-A2- 2 380 919        WO-A1-2007/118866**
**WO-A1-2012/115951**

**Description**

FIELD OF THE INVENTION

The present disclosure provides a polyethylene composition having density from 0.930 to 0.945 g/cm$^3$ and high Environmental Stress Cracking Resistance. Such polyethylene composition can be used for preparing membranes, in particular geomembranes.

Geomembranes are generally employed for waste containment, mining applications or water containment and conveyance.

BACKGROUND OF THE INVENTION

It is known that polyethylene materials can be used for producing geomembranes, as disclosed in EP2380919A2.

In fact polyethylene materials with medium to high density are characterized by a suitable balance of chemical inertia, flexibility and processability.

Another important requirement for use in geomembranes is the Environmental Stress Cracking Resistance (ESCR).

However it is very difficult to achieve in the said polyethylene materials a good balance between ESCR and processability.

In fact, to achieve good processability, particularly when the geomembrane is produced via blown film extrusion, a high melt strength is required, but an increase in melt strength is generally associated with a decrease in ESCR.

It has now been found that by properly selecting the molecular weights and molecular structure of the composition, an improved balance of melt strength, resulting from increased elongational hardening of the molten polymer, and ESCR is achieved.

SUMMARY OF THE INVENTION

The present disclosure provides a polyethylene composition having the following features:

1) density from 0.930 to 0.945 g/cm$^3$, preferably from 0.935 to 0.942 g/cm$^3$, determined according to ISO 1183 at 23°C;
2) ratio MIF/MIP from 30 to 55, in particular from 35 to 50, where MIF is the melt flow index at 190°C with a load of 21.60 kg, and MIP is the melt flow index at 190°C with a load of 5 kg, both determined according to ISO 1133;
3) MIF from 3 to 25 g/10 min., preferably from 5 to 20 g/10 min., more preferably from 5 to 18 g/10min.;
4) Mz equal to or greater than 1,500,000 g/mol, preferably equal to or greater than 2,000,000 g/mol, measured by GPC-MALLS (Gel Permeation Chromatography coupled with Multi-angle laser-light scattering);
5) long-chain branching index, LCBI, equal to or lower than 0.55, preferably equal to or lower than 0.50;

wherein LCBI is the ratio of the measured mean-square radius of gyration $R_g$, measured by GPC-MALLS, to the mean-square radius of gyration for a linear PE having the same molecular weight at a mol. weight of 1,000,000 g/mol.

BRIEF DESCRIPTION OF THE DRAWINGS

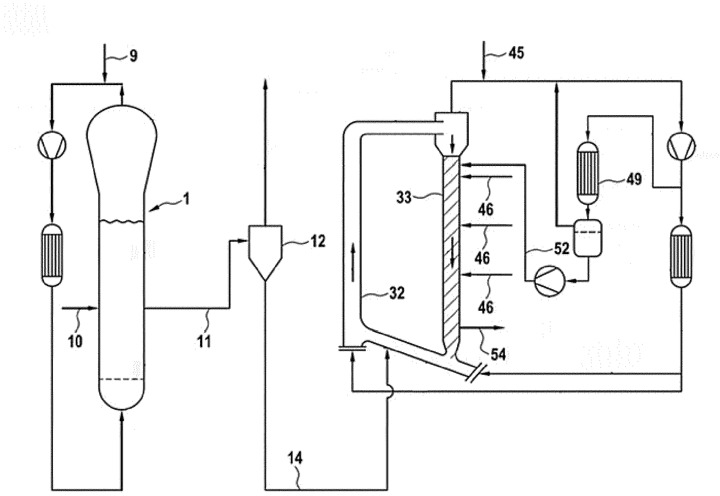

These and other features, aspects, and advantages of the present disclosure will become better understood with reference to the following description and appended claims, and accompanying drawing figure where:
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.

It should be understood that the various embodiments are not limited to the arrangements and instrumentality shown in the drawing figure.

DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art.

Typically the polyethylene composition of the present invention consists of or comprises one or more ethylene copolymers.

All the features herein defined, comprising the previously defined features 1) to 5), are referred to the said ethylene polymer or ethylene polymer composition. The addition of other components, like the additives normally employed in the art, can modify one or more of said features.

The ratio MIF/MIP provides a rheological measure of molecular weight distribution.

Another measure of the molecular weight distribution is provided by the ratio $M_{w\_MALLS}/M_{n\_GPC}$, where $M_{w\_MALLS}$ is the weight average molar mass measured with MALLS coupled to GPC and $M_{n\_GPC}$ is the number average molar mass, measured by GPC (Gel Permeation Chromatography), as explained in the examples.

Preferred $M_{w\_MALLS}/M_{n\_GPC}$ values for the polyethylene composition of the present invention range from 36 to 48.

The $M_{w\_MALLS}$ values are preferably equal to or higher than 300,000 g/mol, more preferably equal to or higher than 350,000 in particular from 300,00 or 350,000 to 600,000 g/mol.

Specific and preferred ranges of Mz for the polyethylene composition of the present invention are from 1,500,000 to 3,500,000 g/mol, more preferably from 2,000,000 to 3,500,000 g/mol.

Moreover the polyethylene composition of the present invention has preferably at least one of the following additional features.

- MIP: 0.05 - 1.5 g/10 min.;
- Elongational hardening at 0.5 s$^{-1}$, T = 150 °C of 0.9 or higher, in particular from 0.9 to 2;
- Elongational hardening at 0.1 s$^{-1}$, T = 150 °C of 0.9 or higher, in particular from 0.9 to 2;
- Comonomer content equal to or less than 8% by weight, in particular from 3 to 8% by weight, with respect to the total weight of the composition.

The comonomer or comonomers present in the ethylene copolymers are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

Specific and preferred ranges of LCBI for the polyethylene composition of the present invention are from 0.55 to 0.30, more preferably from 0.50 to 0.30.

In particular, in a preferred embodiment, the present composition comprises:

A) 40 - 60% by weight of an ethylene homopolymer or copolymer (the copolymer being preferred) with density equal to or greater than 0.945 g/cm$^3$ and melt flow index MIE at 190°C with a load of 2.16 kg, according to ISO 1133, of 1 - 25 g/10 min.;

B) 40 - 60% by weight of an ethylene copolymer having a MIE value lower than the MIE value of A), preferably lower than 0.5 g/10 min.

The above percent amounts are given with respect to the total weight of A) + B).

As previously said, the present polyethylene composition can be advantageously used in membrane, particularly geomembrane applications.

In fact it is preferably characterized by ESCR values, measured by FNCT 80°C/4 MPa, of 450 h or higher, more preferably of 500 h or higher, in particular from 450 or 500 h to 1,000 h.

Moreover, the polyethylene composition of the present invention can be melt-processed at surprisingly high values of shear rate, still without undergoing pressure oscillations and flow-instabilities.

The membranes can be mono- or multilayer, and comprise the polyethylene composition of the invention in at least one layer.

Said membranes, in particular geomembranes, can be prepared with the apparatuses and processes well known in the relevant art, in particular by flat extrusion, blown extrusion and lamination.

It is possible to produce multilayer structures by coextrusion, wherein the polymer materials constituting the single layers are fed to different extruders and coextruded one on top of the other, or to extrude separately the single layers and obtain the multilayer structure by laminating together the layers by means of heat.

While no necessary limitation is known to exist in principle on the kind of polymerization processes and catalysts to be used, it has been found that the polyethylene composition of the present invention can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the polyethylene composition of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

a) a solid catalyst component comprising a Ti compound supported on $MgCl_2$;
b) an organo-Al compound; and optionally
c) an external electron donor compound $ED_{ext}$.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. U.S. Patent No. 4,298,718 and U.S. Patent No. 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

Particularly suitable for the preparation of the polyethylene composition of the present invention are the catalysts wherein the solid catalyst component a) is obtained by contacting the titanium compound with the $MgCl_2$, or a precursor Mg compound, optionally in the presence of an inert medium, at a temperature from 130 to 150°C, in particular from 135 to 150°C.

The contact with the titanium compound can be carried out one or more times. It can also be carried out in the presence of an electron donor compound. Examples of electron donor compounds are the same as given herein after for the external electron donor compound $ED_{ext}$.

Generally the contact with the titanium compound is carried out at the said temperatures for a total time length of 0.5-2 hours.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2 (R''OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in U.S. Patent No. 4,469,648, U.S. Patent No. 4,399,054, and WO98/44009. Another useable method for the spherulization is the spray cooling described for example in U.S. Patent No. 5,100,849 and 4,829,034.

Particularly interesting are the $MgCl_2 \bullet (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method) due to pores with radius up to 0.1 $\mu$m ranging from 0.15 to 2.5 $cm^3$/g preferably from 0.25 to 1.5 $cm^3$/g.

At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Al-alkyl compound.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts is preferably selected from the group consisting of ethers, esters, amines, ketones, nitriles, silanes and their mixtures.

Before carrying out the ethylene polymerization to prepare the composition of the present invention, the catalyst can be prepolymerized according to known techniques, by producing reduced amounts of polyolefin, preferably polypropylene or polyethylene. The amount of prepolymer produced can be up to 500 g per g of component a).

It has been found that by using the above described polymerization catalyst, the polyethylene composition of the present invention can be prepared in a process comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, a copolymerization of ethylene to produce a relatively low molecular weight ethylene copolymer (step a) is performed upstream the copolymerization of ethylene to produce a relatively high molecular weight ethylene copolymer (step b). To this aim, in step a) a gaseous mixture comprising ethylene, hydrogen, comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE from 1 - 25 g/10 min. In order to obtain the above MIE range, in step a) the hydrogen/ethylene molar ratio is indicatively from 0.5 to 3, the amount of ethylene monomer being from 2 to 15% by volume, preferably from 4 to 10% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 3.5 MPa.

In a preferred embodiment, the ethylene polymer obtained in step a) represents from 40 to 60% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.005 and 0.2, the ethylene concentration being comprised from 0.5 to 15%, preferably 0.5 - 10%, by volume, the comonomer concentration being comprised from 0.2 to 1.2 % by volume, based on the total volume of gas present in said downcomer. The rest is propane or similar inert gases. Since a very low molar concentration of hydrogen is present in the downcomer, by carrying out the process of the present invention is possible to bond a relatively high amount of comonomer to the high molecular weight polyethylene fraction.

The polymer particles coming from the downcomer are reintroduced in the riser of step b).

Since the polymer particles keep reacting and no more comonomer is fed to the riser, the concentration of said comonomer drops to a range of 0.1 to 0.8 % by volume, based on the total volume of gas present in said riser. In practice, the comonomer content is controlled in order to obtain the desired density of the final polyethylene. In the riser of step b) the hydrogen/ethylene molar ratio is in the range of 0.2 to 1, the ethylene concentration being comprised between 5 and 15 % by volume based on the total volume of gas present in said riser. The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

**Density**

Determined according to ISO 1183 at 23°C.

**Molecular Weight Distribution Determination**

The determination of the molar mass distributions and the mean number average mol. weight Mn was carried out by high-temperature gel permeation chromatography using a method described in ISO 16014-1, -2, -4, issues of 2003. The weight-average mol. weight $M_w$ and the z-average $M_z$, as well as the $M_w/M_n$ derived where determined by the MALLS coupled to the GPC, as described below. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used. The solvent was vacuum destilled under Nitrogen and was stabilized with 0.025% by weight of 2,6-di-tert-butyl-4-methylphenol. The flowrate used was 1 ml/min, the injection was $500\mu l$ and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$=0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

**Melt flow index**

Determined according to ISO 1133 at 190°C with the specified load.

**Long Chain Branching index (LCBI)**

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with $30\mu$m particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.
The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M} / <Rg^2>_{linear\ ref.,M}$$

where $<Rg^2>$, M is the root-mean-square radius of gyration for the fraction of mol. weight M.
The radius of gyration for each fraction eluted from the GPC (as described above but with a flow-rate of 0.6 ml/min and a column packed with $30\mu$m particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.
The same protocol is described in the following documents.

Zimm BH, Stockmayer WH (1949) The dimensions of chain molecules containing branches and rings. J Chem Phys 17

Rubinstein M., Colby RH. (2003), Polymer Physics, Oxford University Press

**Comonomer content**

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

**Environmental stress cracking resistance according to full notch creep test (FNCT)**

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section (10x10x100 mm) are notched using a razor blade on four sides perpendicularly to the stress direction. A notching device described in M. Fleissner in Kunststoffe 77 (1987), pp. 45 is used for the sharp notch with a depth of 1.6 mm. The load applied is calculated from tensile force divided by the initial ligament area. Ligament area is the remaining area = total cross-section area of specimen minus the notch area. For FNCT specimen: 10x10 $mm^2$ - 4 times of trapezoid notch area = 46.24 $mm^2$ (the remaining cross-section for the failure process / crack propagation). The test specimen is loaded with standard condition suggested by the ISO 16770 with constant load of 4 MPa at 80°C in a 2% (by weight) water solution of non-ionic surfactant ARKOPAL N100 and 5% of anionic surfactant GENAPOL Paste (Clariant CAS 68891-38-3). Time until rupture of test specimen is detected.

**Elongational Hardening**

Elongational hardening is the increase of melt viscosity measured under uniaxial elongation with constant elongational rate as compared to the steady-state viscosity value, $\eta_{E,max} / \eta_s$. The higher this ratio at fast elongational rates in a rheometric experiment is (typically at elong. rates of $1s^{-1}$ and $5s^{-1}$) the more stable is the molten polymer during processing, where high elongations and drawdown ratios are involved, e.g. in blown extrusion.

The determination of elongational hardening (also called strain hardening) was carried out during uniaxial elongation, at a constant elongational rate and at T = 150°C.

The measurements were performed on a rotational rheometer instrument Physica MCR 301 from AntonPaar, equipped with the Sentmanant Elongational Rheology tool (SER). The measurements were performed at 150 °C, after an annealing time of 5 min at the measurement temperature. The measurements were repeated for different specimens of each sample at elongational rates varying between 0.01 $s^{-1}$ and 10 $s^{-1}$, typically at 0.01, 0.05, 0.1, 0.5, 1, 5, 10 $s^{-1}$. For each measurement, the uniaxial elongational melt viscosity was recorded as a function of time.

The test specimens were prepared for the measurement as follows: 2.2 g of the material were weighted and used to fill a moulding plate of 70x40x1mm. The plate was placed in a press and heated up to 200°C, for 1 min, under a pressure of 25 bar. After the temperature of 200°C was reached, the sample was pressed at 100 bar for 4 min. After the end of the compression-time, the material was cooled to room temperature and plates were removed from the form. From the 1mm thick compressed polymer plate, rectangular films of 12x11 mm were cut off and measured.

Elongational hardening in uniaxial elongation is the ratio of the maximum melt elongational viscosity measured at the specific elongation rate, $\eta_{E,max}$, over the linear response at the same time, $\eta_s$. The $\eta_{E,max}$, in case no plateau is observed after a certain elongation, can be defined as the maximum polymer melt viscosity value, under uniaxial elongation with the specific elongational rate at the temperature of 150°C, measured at a time t = 3x1/(elongatinoal-rate) after the start of deformation or at elongations L(t)/L(0) $\geq$ 3 (e.g. for elongational rates of 1 1/s after t = 3 sec and for elongational rates of 5 1/s after t = 0.6 sec).

The linear viscoelastic response, $\eta s$, is calculated from fitting linear rheological data of G' and G" at the same temperature with a multi-mode Maxwell model, calculating the transient shear viscosity and multiplying by 3 (Trouton ratio). Due to the fact that the measurement is not an ideal uniaxial elongation, the Trouton ratio may be between 3 and 4 with the target being to fit the steady-state elongational viscosity curve at all measured elongational rates.

The method is described in Mackosko C.W. Rheology Principles, Measurements and Applications, 1994, Wiley-VCH, New York. As known in the art, there is a direct correlation between strain hardening at uniaxial elongation and long-chain branching in PE.

**Example 1**

Process Setup

The process of the invention was carried out under continuous conditions in a plant comprising two serially connected gas-phase reactors, as shown in the drawing.

The solid catalyst component is prepared as follows.

A magnesium chloride and alcohol adduct containing about 3 mols of alcohol is prepared following the method described in example 2 of United States Patent No. 4,399,054, but working at 2000 RPM instead of 10000 RPM. The adduct is subjected to a thermal treatment, under nitrogen stream, over a temperature range of 50-150 °C until a weight content of 25% of alcohol is reached. Into a 2 L four-necked round flask, purged with nitrogen, 1 L of $TiCl_4$ is introduced at about 0°C. Then, at about the same temperature, 70 g of a spherical $MgCl_2$/EtOH adduct containing 25 %wt of ethanol and prepared as described above is added under stirring. The temperature is raised to about 140°C in about 2 h and maintained for about 60 min. Then, the stirring is discontinued, the solid product is allowed to settle and the supernatant liquid is siphoned off.

The solid residue is then washed once with heptane at 80°C and five times with hexane at 25°C and dried under vacuum at 30°C.

A sufficient amount of solid catalyst component prepared according to the above reported synthetic route was prepolymerized with propylene in amount of 1g polypropylene/g of catalyst component, in accordance with the method described in Example 7 of WO01/85803.

Polymerization

11.5 g/h of the solid catalyst component were fed, using 5.0 kg/h of liquid propane, to a precontacting apparatus, in which also triisobutylaluminum (TIBA) was dosed. The weight ratio between aluminum alkyl and solid catalyst component was 2.0 g/g. The precontacting step was carried out under stirring at 40°C with a total residence time of 120 minutes.

The catalyst enters the first gas-phase polymerization reactor 1 of the drawing via line 10. In the first reactor ethylene was polymerized using $H_2$ as molecular weight regulator and in the presence of propane as inert diluent. 46 kg/h of ethylene and 42 g/h of hydrogen were fed to the first reactor via line 9. 1.5 kg/h comonomer (1-hexene) was fed to the first reactor.

The polymerization was carried out at a temperature of 80°C and at a pressure of 2.9 MPa. The polymer obtained in the first reactor was discontinuously discharged via line 11, separated from the gas into the gas/solid separator 12, and reintroduced into the second gas-phase reactor via line 14.

The polymer produced in the first reactor had a melt index MIE of 16.2 g/10 min and a density of 0.947 kg/dm$^3$.

The second reactor was operated under polymerization conditions of about 77°C, and a pressure of 2.5 MPa. 15 kg/h of ethylene and 3.5 kg/h of 1-hexene were introduced in the downcomer 33 of the second reactor via line 46. 5.0 kg/h of propane, 25 kg/h of ethylene and 9.5 g/h of hydrogen were fed through line 45 into the recycling system.

In order to broaden the molecular weight distribution of the final ethylene polymer, the second reactor was operated by establishing different conditions of monomers and hydrogen concentration within the riser 32 and the downcomer 33. This is achieved by feeding via line 52, 330 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 50°C and 2.45 MPa, wherein a part of the recycle stream is cooled and partially condensed. As shown in the drawing, a separating vessel and a pump are placed, in the order, downstream the condenser 49. The final polymer was discontinuously discharged via line 54.

The polymerization process in the second reactor produced relatively high molecular weight polyethylene fractions. In Table 1 the properties of the final product are specified. It can be seen that the melt index of the final product is decreased as compared to the ethylene resin produced in the first reactor, showing the formation of high molecular weight fractions in the second reactor.

The first reactor produced around 52 % by weight (split wt %) of the total amount of the final polyethylene resin produced by both first and second reactors. At the same time, the obtained polymer is endowed with a broad molecular weight distribution as witnessed by a ratio MIF/MIP equal to 43.4.

The comonomer (hexene-1) amount was of about 5% by weight.

## Comparative Example 1

The polymer of this comparative example is a polyethylene composition, prepared with a loop polymerization process, available on the market with the commercial name Marlex K306 (ChevronPhillips).

Table 1

|  | Ex. 1 | Comp. 1 |
|---|---|---|
| **Operative conditions first reactor - preparation of copolymer (A)** |  |  |
| $H_2/C_2H_4$ Molar ratio | 1.2 |  |
| $C_2H_4$% | 5.5 |  |
| $C_6H_{12}$ % | 0.17 |  |
| Split (wt%) | 52 |  |
|  |  |  |
| **Operative conditions second reactor - preparation of copolymer (B)** |  |  |
| $H_2/C_2H_4$ Molar ratio riser | 0.5 |  |
| $C_2H_4$% riser | 9.3 |  |
| $C_6H_{12}$ %riser | 0.55 |  |
| $H_2/C_2H_4$ Molar ratio downcomer | 0.03 |  |
| $C_2H_4$% downcomer | 1.0 |  |
| $C_6H_{12}$ % downcomer | 0.90 |  |
| $H_2/C_2H_4$ Molar ratio barrier | 0.003 |  |

(continued)

| Operative conditions second reactor - preparation of copolymer (B) | | |
|---|---|---|
| $C_2H_4$% barrier | 3.9 | |
| $C_6H_{12}$ % barrier | 0.95 | |
| | | |
| **Polymer properties** | | |
| MIE (A) [g/10 min] | 16.2 | |
| Density (A) [g/cm$^3$] | 0.947 | |
| MIP final resin [g/10 min] | 0.30 | 0.46 |
| MIF final resin [g/10 min] | 12.9 | 11.9 |
| Density final resin [g/cm$^3$] | 0.938 | 0.938 |
| MIF/MIP final resin | 43.4 | 25.8 |
| FNCT (80°C, 4 MPa) [h] | 594.8 | 142.1 |
| $M_{w\_MALLS}/M_{n\_GPC}$ | 42 | 7 |
| $M_{w\_MALLS}$ [g/mol] from GPC-MALLS | 531,612 | 142,395 |
| $M_{z\_MALLS}$ [g/mol] from GPC-MALLS | 2,636,636 | 458,723 |
| LCB g' (at 1,000,000 g/mol) from GPC MALLS | 0.42 | 0.97 |
| Elongational Hardening @ 0.5 s$^{-1}$, T = 150 °C | 1.2 | 1.2 |
| Elongational Hardening @ 0.1 s$^{-1}$, T = 150 °C | 1.2 | 1.2 |
| Notes : $C_2H_4$ = ethylene; $C_6H_{12}$ = hexene. | | |

**Claims**

1. A polyethylene composition having the following features:

    1) density from 0.930 to 0.945 g/cm$^3$, preferably from 0.935 to 0.942 g/cm$^3$, determined according to ISO 1183 at 23°C;
    2) ratio MIF/MIP from 30 to 55, in particular from 35 to 50, where MIF is the melt flow index at 190°C with a load of 21.60 kg, and MIP is the melt flow index at 190°C with a load of 5 kg, both determined according to ISO 1133;
    3) MIF from 3 to 25 g/10 min., preferably from 5 to 20 g/10 min., more preferably from 5 to 18 g/10min.;
    4) Mz equal to or greater than 1,500,000 g/mol, preferably equal to or greater than 2,000,000 g/mol, measured by GPC-MALLS (Gel Permeation Chromatography coupled with Multi-angle laser-light scattering);
    5) long-chain branching index, LCBI, equal to or lower than 0.55, preferably equal to or lower than 0.50 at a molecular weight of 1,000,000 g/mol;

    wherein LCBI is the ratio of the measured mean-square radius of gyration $R_g$, measured by GPC-MALLS, to the mean-square radius of gyration for a linear PE having the same molecular weight.

2. The polyethylene composition of claim 1, having Mw values equal to or higher than 300,000 g/mol.

3. The polyethylene composition of claim 1, consisting of or comprising one or more ethylene copolymers.

4. The polyethylene composition of claims 1 to 3, obtainable by using a Ziegler-Natta polymerization catalyst.

5. The polyethylene composition of claim 4, wherein the Ziegler-Natta polymerization catalyst comprises the product of reaction of:

    a) a solid catalyst component comprising a Ti compound supported on $MgCl_2$, said component being obtained by contacting the titanium compound with the $MgCl_2$, or a precursor Mg compound, optionally in the presence of an inert medium, at a temperature from 130 to 150°C, in particular from 135 to 150°C;
b) an organo-Al compound; and optionally
c) an external electron donor compound.

6. The polyethylene composition of claim 1, having at least one of the following additional features:

- Mw/Mn values from 36 to 48;
- MIP: 0.05 - 1.5 g/10 min.;
- Elongational hardening at 0.5 s$^{-1}$, T = 150 °C of 0.9 or higher, in particular from 0.9 to 2;
- Elongational hardening at 0.1 s$^{-1}$, T = 150 °C of 0.9 or higher, in particular from 0.9 to 2;
- Comonomer content equal to or less than 8% by weight, in particular from 3 to 8% by weight, with respect to the total weight of the composition.

7. The polyethylene composition of claim 1, comprising:

A) 40 - 60 % by weight of an ethylene homopolymer or copolymer with density equal to or greater than 0.945 g/cm$^3$ and melt flow index MIE at 190°C with a load of 2.16 kg, according to ISO 1133, of 1 - 25 g/10 min.;
B) 40 - 60 % by weight of an ethylene copolymer having a MIE value lower than the MIE value of A), preferably lower than 0.5 g/10 min.

8. Manufactured articles comprising the polyethylene composition of claim 1.

9. Manufactured articles according to claim 8, in form of mono- or multilayer membranes, wherein at least one layer comprises the polyethylene composition of claim 1.

10. Process for preparing the polyethylene composition of claim 1, wherein all the polymerization steps are carried out in the presence of a Ziegler-Natta polymerization catalyst supported on $MgCl_2$.

11. The process of claim 10, comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung mit den folgenden Merkmalen:

1) einer Dichte von 0,930 bis 0,945 g/cm$^3$, vorzugsweise 0,935 bis 0,942 g/cm$^3$, bestimmt gemäß ISO 1183 bei 23 °C;
2) einem Verhältnis von MIF/MIP von 30 bis 55, insbesondere von 35 bis 50, wobei MIF der Schmelzindex bei 190 °C unter einer Last von 21,60 kg ist und MIP der Schmelzindex bei 190 °C unter einer Last von 5 kg ist, wobei beide gemäß ISO 1133 bestimmt werden;
3) einem MIF von 3 bis 25 g/10 Min, vorzugsweise 5 bis 20 g/10 Min, bevorzugter von 5 bis 18 g/10 Min;
4) einem Mz gleich oder größer als 1.500.000 g/mol, vorzugsweise gleich oder größer als 2.000.000 g/mol, gemessen mittels GPC-MALLS (Gelpermeationschromatographie, gekoppelt mit Mehrfachwinkel-Laserlichtstreuung);
5) einem langkettigem Verzweigungsindex, LCBI, gleich oder kleiner als 0,55, vorzugsweise gleich oder kleiner als 0,50 bei einem Molekulargewicht von 1.000.000 g/mol;

wobei der LCBI das Verhältnis von gemessenem mittlerem quadratischem Trägheitsradius $R_g$, gemessen mittels GPC-MALLS, zu dem mittleren quadratischen Trägheitsradius für ein lineares PE mit demselben Molekulargewicht ist.

2. Polyethylenzusammensetzung nach Anspruch 1 mit Mw-Werten gleich oder höher als 300.000 g/mol.

3. Polyethylenzusammensetzung nach Anspruch 1, die aus einem oder mehreren Ethylencopolymeren besteht oder diese umfasst.

4. Polyethylenzusammensetzung nach den Ansprüchen 1 bis 3, die unter Verwendung eines Ziegler-Natta-Polymerisationskatalysators erhältlich ist.

5. Polyethylenzusammensetzung nach Anspruch 4, wobei der Ziegler-Natta-Polymerisationskatalysator das Reaktionsprodukt von

a) einer festen Katalysatorkomponente, die eine Ti-Verbindung geträgert auf $MgCl_2$ umfasst, wobei die Komponente erhalten wird, indem die Titanverbindung mit dem $MgCl_2$ oder einer Vorläufer-Mg-Verbindung, gegebenenfalls in Anwesenheit eines inerten Mediums, bei einer Temperatur von 130 bis 150 °C, insbesondere 135 bis 150 °C kontaktiert wird;
(b) einer Organo-Al-Verbindung und gegebenenfalls mit
(c) einer externen Elektronendonorverbindung umfasst.

6. Polyethylenzusammensetzung nach Anspruch 1 mit mindestens einem der folgenden zusätzlichen Merkmale:

- Mw/Mn-Werte von 36 bis 48;
- MIP: 0,05 bis 1,5 g/10 min.;
- Dehnungsverfestigung bei 0,5 $s^{-1}$, T = 150 °C von 0,9 oder höher, insbesondere von 0,9 bis 2;
- Dehnungsverfestigung bei 0,1 $s^{-1}$, T = 150 °C von 0,9 oder höher, insbesondere von 0,9 bis 2;
- Comonomergehalt gleich oder kleiner als 8 Gew.%, insbesondere 3 bis 8 Gew.%, bezogen auf das Gesamtgewicht der Zusammensetzung.

7. Polyethylenzusammensetzung nach Anspruch 1, umfassend:

A) 40 bis 60 Gew.% eines Ethylenhomopolymers oder -copolymers mit einer Dichte gleich oder größer als 0,945 $g/cm^3$ und einem Schmelzindex MIE bei 190 °C unter einer Last von 2,16 kg gemäß ISO 1133 von 1 bis 25 g/10 min.;
B) 40 bis 60 Gew.% eines Ethylencopolymers mit einem MIE-Wert, der unter dem MIE-Wert von A) liegt, vorzugsweise unter 0,5 g/10 min.

8. Gefertigte Artikel, umfassend die Polyethylenzusammensetzung nach Anspruch 1.

9. Gefertigte Artikel nach Anspruch 8 in Form von ein- oder mehrschichtigen Membranen, wobei mindestens eine Schicht die Polyethylenzusammensetzung gemäß Anspruch 1 umfasst.

10. Verfahren zur Herstellung der Polyethylenzusammensetzung nach Anspruch 1, wobei alle der Polymerisationsstufen in Anwesenheit eines auf $MgCl_2$ geträgerten Ziegler-Natta-Polymerisationskatalysators durchgeführt werden.

11. Verfahren nach Anspruch 10, umfassend die folgenden Stufen in beliebiger Reihenfolge:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die geringer als in Stufe a) ist;

wobei in mindestens einem der Gasphasenreaktoren die wachsenden Polymerpartikel durch eine erste Polymerisationszone unter schnellen Verwirbelungs- oder Transportbedingungen aufwärts fließen, das Steigrohr verlassen und in eine zweite Polymerisationszone eintreten, durch die sie unter Einwirkung der Schwerkraft abwärts fließen, die zweite Polymerisationszone verlassen und wieder in die erste Polymerisationszone eingebracht werden, wodurch ein Polymerkreislauf zwischen den beiden Polymerisationszonen eingerichtet wird.

**Revendications**

1. Composition de polyéthylène ayant les caractéristiques suivantes :

   1) masse volumique de 0,930 à 0,945 g/cm$^3$, de préférence de 0,935 à 0,942 g/cm$^3$, déterminée selon ISO 1183 à 23 °C ;
   2) rapport MIF/MIP de 30 à 55, en particulier de 35 à 50, où MIF est l'indice de fluidité à chaud à 190 °C avec une charge de 21,60 kg, et MIP est l'indice de fluidité à chaud à 190 °C avec une charge de 5 kg, tous deux déterminés selon ISO 1133 ;
   3) MIF de 3 à 25 g/10 min, de préférence de 5 à 20 g/10 min, de préférence encore de 5 à 18 g/10 min ;
   4) Mz égal ou supérieur à 1 500 000 g/mol, de préférence égal ou supérieur à 2 000 000 g/mol, mesuré par CPG-MALLS (chromatographie par perméation de gel couplée à une diffusion de lumière laser à angles multiples) ;
   5) indice de ramification à chaîne longue, LCBI, égal ou inférieur à 0,55, de préférence égal ou inférieur à 0,50 à un poids moléculaire de 1 000 000 g/mol ;

   dans laquelle LCBI est le rapport du rayon quadratique moyen mesuré de giration $R_g$, mesuré par CPG-MALLS, au rayon quadratique moyen de giration pour un PE linéaire ayant le même poids moléculaire.

2. Composition de polyéthylène selon la revendication 1, ayant des valeurs Mw égales ou supérieures à 300 000 g/mol.

3. Composition de polyéthylène selon la revendication 1, constituée de ou comprenant un ou plusieurs copolymères d'éthylène.

4. Composition de polyéthylène selon les revendications 1 à 3, pouvant être obtenue en utilisant un catalyseur de polymérisation Ziegler-Natta.

5. Composition de polyéthylène selon la revendication 4, dans laquelle le catalyseur de polymérisation Ziegler-Natta comprend le produit de réaction de :

   a) un composant catalyseur solide comprenant un composé de Ti supporté sur MgCl$_2$, ledit composant étant obtenu par mise en contact du composé de titane avec le MgCl$_2$, ou un composé de Mg précurseur, éventuellement en présence d'un milieu inerte, à une température de 130 à 150 °C, en particulier de 135 à 150 °C ;
   b) un composé organo-Al ; et éventuellement
   c) un composé donneur d'électrons externe.

6. Composition de polyéthylène selon la revendication 1, ayant au moins l'une des caractéristiques supplémentaires suivantes :

   - valeurs Mw/Mn de 36 à 48 ;
   - MIP : 0,05 - 1,5 g/10 min ;
   - Durcissement par allongement à 0,5 s$^{-1}$, T = 150 °C de 0,9 ou plus, en particulier de 0,9 à 2 ;
   - Durcissement par allongement à 0,1 s$^{-1}$, T = 150 °C de 0,9 ou plus, en particulier de 0,9 à 2 ;
   - Teneur en comonomère égale ou inférieure à 8 % en poids, en particulier de 3 à 8 % en poids, par rapport au poids total de la composition.

7. Composition de polyéthylène selon la revendication 1, comprenant :

   A) 40 à 60 % en poids d'un homopolymère ou copolymère d'éthylène ayant une masse volumique égale ou supérieure à 0,945 g/cm$^3$ et un indice de fluidité à chaud MIE à 190 °C avec une charge de 2,16 kg, selon ISO 1133, de 1 à 25 g/10 min ;
   B) 40 à 60 % en poids d'un copolymère d'éthylène ayant une valeur MIE inférieure à la valeur MIE de A), de préférence inférieure à 0,5 g/10 min.

8. Articles manufacturés comprenant la composition de polyéthylène selon la revendication 1.

9. Articles manufacturés selon la revendication 8, sous forme de membranes mono- ou multicouches, dans lesquels au moins une couche comprend la composition de polyéthylène selon la revendication 1.

10. Procédé de préparation de la composition de polyéthylène selon la revendication 1, dans lequel toutes les étapes de polymérisation sont effectuées en présence d'un catalyseur de polymérisation Ziegler-Natta supporté sur $MgCl_2$.

11. Procédé selon la revendication 10, comprenant les étapes suivantes, dans n'importe quel ordre mutuel :

a) la polymérisation de l'éthylène, éventuellement avec un ou plusieurs comonomères, dans un réacteur en phase gazeuse en présence d'hydrogène ;
b) la copolymérisation de l'éthylène avec un ou plusieurs comonomères dans un autre réacteur en phase gazeuse en présence d'une quantité d'hydrogène inférieure à l'étape a) ;

où, dans au moins l'un desdits réacteurs en phase gazeuse, les particules de polymère en croissance s'écoulent vers le haut à travers une première zone de polymérisation dans des conditions de fluidisation ou de transport rapides, quittent ladite colonne montante et entrent dans une seconde zone de polymérisation à travers laquelle elles s'écoulent vers le bas sous l'action de la gravité, quittent ladite seconde zone de polymérisation et sont réintroduites dans la première zone de polymérisation, établissant ainsi une circulation de polymère entre lesdites deux zones de polymérisation

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2380919 A2
- US 4298718 A
- US 4495338 A
- US 4469648 A
- US 4399054 A
- WO 9844009 A
- US 5100849 A
- US 4829034 A
- EP 395083 A
- WO 2005019280 A
- WO 0185803 A

### Non-patent literature cited in the description

- **D. GELDART.** Gas Fluidisation Technology. J. Wiley & Sons Ltd, 1986, 155
- **BENOIT H. ; REMPP P. ; GRUBISIC Z.** J. Polymer Sci., Phys. Ed. 1967, vol. 5, 753
- **ZIMM BH ; STOCKMAYER WH.** The dimensions of chain molecules containing branches and rings. *J Chem Phys,* 1949, vol. 17
- **RUBINSTEIN M. ; COLBY RH.** Polymer Physics. Oxford University Press, 2003
- **M. FLEISSNER.** *Kunststoffe,* 1987, vol. 77, 45
- *CHEMICAL ABSTRACTS,* 68891-38-3
- **MACKOSKO C.W.** Rheology Principles, Measurements and Applications. Wiley-VCH, 1994